(19)

**Europäisches Patentamt**
**European Patent Office**
**Office européen des brevets**

(11) **EP 4 657 296 A1**

(12) **EUROPEAN PATENT APPLICATION**

(43) Date of publication:
**03.12.2025 Bulletin 2025/49**

(21) Application number: **25178608.3**

(22) Date of filing: **23.05.2025**

(51) International Patent Classification (IPC):
**G06F 21/60** *(2013.01)* **H04L 9/40** *(2022.01)*

(52) Cooperative Patent Classification (CPC):
**G06F 21/604; H04L 63/105; H04L 63/1433**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.05.2024 US 202418679735**

(71) Applicant: **Microsoft Technology Licensing, LLC Redmond, WA 98052 (US)**

(72) Inventors:
• **HARARI, Asaf**
  **Redmond, 98052 (US)**
• **HEN, Idan**
  **Redmond, 98052 (US)**
• **ISRAEL, Moshe**
  **Redmond, 98052 (US)**

(74) Representative: **CMS Cameron McKenna Nabarro Olswang LLP**
  **Cannon Place**
  **78 Cannon Street**
  **London EC4N 6AF (GB)**

(54) **CONTEXT-AWARE PERMISSION REDUCTION**

(57) Systems, methods, apparatuses, and program products are disclosed for context-aware permission reduction. A candidate permission set is determined for an entity. A current permission set of the entity is replaced with the candidate permission set based on a criticality score indicative of a criticality of the entity, a stability score indicative of a likelihood that usage of a current permission set by the entity will change in a predetermined period of time, and a security gain score indicative of an amount of security improvement achievable by replacing the current permission set with the candidate permission set. The stability score for the entity may be determined based on historical usage of the current permission set by the entity.

FIG. 1

EP 4 657 296 A1

**Description**

BACKGROUND

Entities, whether human users or software programs, are frequently granted access to permissions beyond what are necessary for their intended tasks or responsibilities. Over-privileging may increase the vulnerability of a system to security threats. Proper access management and adhering to the principle of least privilege (PoLP) help mitigate the risks associated with over-privileging. Under PoLP, individual users and/or software programs are granted the minimum level of access or permissions necessary to perform their required tasks, thereby reducing the potential for unauthorized or excessive access and minimizing the risk of security breaches.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, apparatuses, and program products are disclosed for context-aware permission reduction. A candidate permission set is determined for an entity. A current permission set of the entity is replaced with the candidate permission set based on a criticality score indicative of a criticality of the entity, a stability score indicative of a likelihood that usage of the current permission set by the entity will change in a predetermined period of time, and/or a security gain score indicative of an amount of security improvement achievable by replacing the current permission set with the candidate permission set. In embodiments, the stability score for the entity is determined based on historical usage of the current permission set by the entity.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.

FIG. 1 shows a block diagram of an example system for context-aware permission reduction, in accordance with an embodiment.
FIG. 2 shows a block diagram of an example system for context-aware permission reduction using a factorization machine, in accordance with an embodiment.
FIG. 3 depicts a flowchart of a process for context-aware permission reduction, in accordance with an embodiment.
FIG. 4 depicts a flowchart of a process for context-aware permission reduction based on a combined score, in accordance with an embodiment.
FIG. 5 depicts a flowchart of a process for determining a candidate permission set based on entity and/or resource similarities, in accordance with an embodiment.
FIG. 6 depicts a flowchart of a process for determining a candidate permission set using a factorization machine, in accordance with an embodiment.
FIG. 7 depicts a flowchart of a process for determining a security gain score, in accordance with an embodiment.
FIG. 8 depicts a flowchart of a process for determining an entity criticality score using a classifier model, in accordance with an embodiment.
FIG. 9 depicts a flowchart of a process for determining an entity stability score, in accordance with an embodiment.
FIG. 10 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

DETAILED DESCRIPTION

I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

As used herein, the term "entity" refers to one or more of: a human user, an application, a service, a machine, and/or groups thereof.

As used herein, the term "resource" refers to one or more of: a database, a file, a machine, a service, an application, an entity, and/or groups thereof.

As used herein, the term "permission set" refers to a set of permission assignments granted to an entity to grant the identity a set of permitted tasks, and a resource scope that identifies resources and/or resource groups on which the entity is permitted to perform the set of tasks. In embodiments, permission assignments includes a role and/or group identifier that specifies a set of tasks that an entity that is assigned the role and/or group is permitted to perform, and a resource scope assignment that identifies the resources and/or resource groups on which the entity is permitted to perform the tasks.

As used herein, the term "factorization machine" refers to a supervised machine learning model that captures interactions between features through pairwise factorization. In embodiments, interactions between features are modeled by representing features with latent vectors and calculating the interactions between the features as the dot product of these vectors.

II. Example Embodiments

Least privilege is a principle that aims to provide entities with the minimal required permissions necessary to perform their functions. Least privilege is typically implemented through a combination of access controls and entity permissions. For example, access controls restrict access to resources based on entity identity, role, and/or other attributes, while entity permissions determine what actions an entity can perform on a resource once access is granted. In practice, this requires administrators to carefully configure access controls and entity permissions to ensure that entities have only the minimum set of privileges necessary to perform their intended functions.

Determining an appropriate level of access for an entity can be complex and time-consuming due to balancing of tradeoffs. For instance, granting an entity lesser access may lower the risk of security breaches, but granting insufficient access may result in an unintended denial of access when the entity needs to perform a required task. On the other hand, granting an entity greater access will allow the entity to work in an unconstrained manner by allowing the entity to perform tasks without encountering a denial of access, but granting too much access may unnecessarily increase the risk of security breaches. The complexity associated with right-sizing access has led some to permanently assign roles and/or policies with higher permissions than what is necessary for an entity to perform its tasks.

Least privilege offers a significant security benefit by reducing the potential harm that could result from a security breach and/or attack. By limiting access to sensitive data or systems, the impact of a security incident is minimized when a security incident does occur. For instance, the extent of the security gain from removing permissions from an entity can be quantified by assessing the reduction in potential damage that could result from using the removed permissions. In embodiments, the amount of security gained can be estimated by analyzing relevant attack paths, critical assets, and/or choke points in the security architecture of the system.

Embodiments disclosed herein are directed to context-based permission reduction. By observing past interactions between each entity and resource, embodiments disclosed herein can automatically perform context-based permission reduction based on: a minimal required permission level for an entity, a criticality of the entity, a stability and/or predictability of the interactions between the entity and the resource, and/or an amount of security gained from reducing the permission. In embodiments, a candidate permission set is determined for replacing a current permission set currently assigned to a first entity. As used herein, the term "current permission set" refers to a permissions set that is currently assigned to an entity, and the term "candidate permission set" refers to a reduced permission set that is a subset of the current permission set currently assigned to an entity. For example, the candidate permission set is determined based on a combination of the actual permissions used by the first entity over a predetermined observation period, and/or a recommended permission set generated by a machine learning model (e.g., factorization machine, etc.) that is indicative of permissions used by similar second entities when interacting with similar second resources. In embodiments, the current permission set assigned to the first entity is replaced with the candidate permission set based on various factors, such as, but not limited to, a criticality of the first entity, a permission usage stability associated with the usage of the current permission set by the first entity, and/or an amount of security improvement achievable by replacing the current permission set with the candidate permission set. In embodiments, a combined score is determined based on a weighted combination of the factors and compared to a permission replacement criterion (e.g., threshold, etc.) to determine whether the current permission set should be replaced with the candidate permission set.

In embodiments, a candidate permission set is determined for the first entity based on a combination of: the actual permissions used by the first entity over a predetermined observation period, and/or a recommended permission set generated by a machine learning model (e.g., factorization machine, etc.) that is indicative of permissions used by similar second entities when interacting with similar second resources. For instance, interactions between the first entity and first resources are monitored over the observation period to determine a subset of the current permission set that the first entity actually uses. In embodiments, a factorization machine that is trained using historical interaction information associated with interactions between second entities and second resources, characteristics of the second entities, and/or characteristics of the second resources. In embodiments, characteristics of the first entity and/or characteristics of the first resources are provided as inputs to the trained factorization machine to obtain a recommended permission set for the first entity. In embodiments, the candidate permission set is determined by combining (e.g., set union operation, etc.) the subset of the current permission set that the first entity actually uses and the recommended permission set provided by the factorization machine.

In embodiments, a criticality score is determined for the first entity based on various factors, such as, but not limited to, activity patterns (e.g., average active hours per day, average number of operations, etc.) associated with the first entity, a group (e.g., department, application, service, etc.) associated with the first entity, interactions between the first entity and a first resource, interactions between the first entity and a second entity, characteristics of the first entity, characteristics of the first resource, and/or characteristics of the second entity. As used herein, the term "criticality score" refers to a measure of an importance of the entity, and/or functions thereof, to the functioning of a system. For instance, historical interaction information associated with the first entity, characteristics of the first entity, characteristics of the first resource, and/or characteristics of the second entity are provided as input to a classification model trained to determine the criticality of an entity. In embodiments, the classification model provides, as output, a criticality score for the first entity in various formats, such as, but not limited to, as a classification (e.g., critical, somewhat critical, not critical, etc.), as a Boolean value (e.g., 0, 1, TRUE, FALSE, etc.), and/or as a numerical value within a range of numerical values (e.g., 0-1, -1.0-1.0, etc.) indicative of a likelihood or degree of criticality.

In embodiments, a stability score is determined for the first entity based on various factors, such as, but not limited to, characteristics of interactions between the first entity and first resources the first entity has interacted with, characteristics of the first entity, and/or characteristics of the first resources. As used herein, the term "stability score" refers to a measure of a likelihood that interactions between the first entity and the first resources will change in a future period of time. For instance, characteristics of interactions (e.g., type, permission, etc.) between the first entity and first resources the first entity has interacted with, characteristics (e.g., type, role, group, etc.) of the first entity, and/or characteristics (e.g., type, criticality, etc.) of the first resources are provided as input to a classification model trained to output a likelihood that interactions between the first entity and the first resources will change in subsequent period of time. In embodiments, the stability score is determined as the output from the classification model.

In embodiments, a security gain score is determined for the first entity based on various factors, such as, but not limited to, the current permission set currently assigned to the first entity, the candidate permission set to replace the current permission set, resource characteristics accessible under the current permission set, current attack paths, and/or ongoing security attacks. As used herein, the term "security gain score" refers to a measure of an amount of security gained and/or security risk avoided by replacing the current permission set with the candidate permission set. In embodiments, a delta permission set is determined based on a set difference between the current permission set and the candidate permission set, and a security gain score is determined based on, but not limited to, an attack path that uses a permission in the delta permission set, a resource characteristic associated with a resource accessible by a permission in the delta permission set, and/or an ongoing security attack associated with a permission in the delta permission set. For instance, a higher security gain score is assigned to a candidate permission set when permission removed from the current permission set (e.g., the delta permission set) mitigates known security vulnerabilities (e.g., attack paths, ongoing security attacks, access to sensitive resources, etc.).

In embodiments, the current permission set currently assigned to the first entity is replaced with the candidate permission set based on a combined score satisfying a predetermined permission replacement criterion (e.g., a threshold, etc.). In embodiments, the combined score is determined as a weighted combination of the criticality score, the stability score, and/or the security gain score. For instance, the weighted score is determined based on the following equation:

$$Combined\ Score = \alpha \times S_{Criticality} + \beta \times S_{Stability} + \gamma \times S_{Security} \qquad (Eq.\ 1),$$

where $S_{Criticality}$ represents the criticality score, $S_{Stability}$ represents the stability score, $S_{Security}$ represents the security gain

score, and $\alpha$, $\beta$, and $\gamma$ are control parameters that determine the weight assigned to the criticality score, stability score, and security gain score, respectively. In embodiments, $\alpha$, $\beta$, and $\gamma$ are determined in various ways, such as, but not limited to, based on input from subject matter experts, based on empirical, heuristic, and/or statistical analysis of historical data, and/or the like.

In embodiments, an action is performed responsive to the combined score, and/or components thereof, satisfying one or more permission replacement criteria (e.g., threshold, etc.). For instance, when a permission replacement criterion is satisfied, the current permission set is replaced by the candidate permission set. In embodiments, permission set replacement is performed automatically (e.g., without any human intervention, etc.), semi-automatically (e.g., by prompting a user for approval, etc.), and/or manually (e.g., by providing an alert and/or instructions for a user to perform the change, etc.).

These and further embodiments are disclosed herein that enable the functionality described above and additional functionality. Such embodiments are described in further detail as follows.

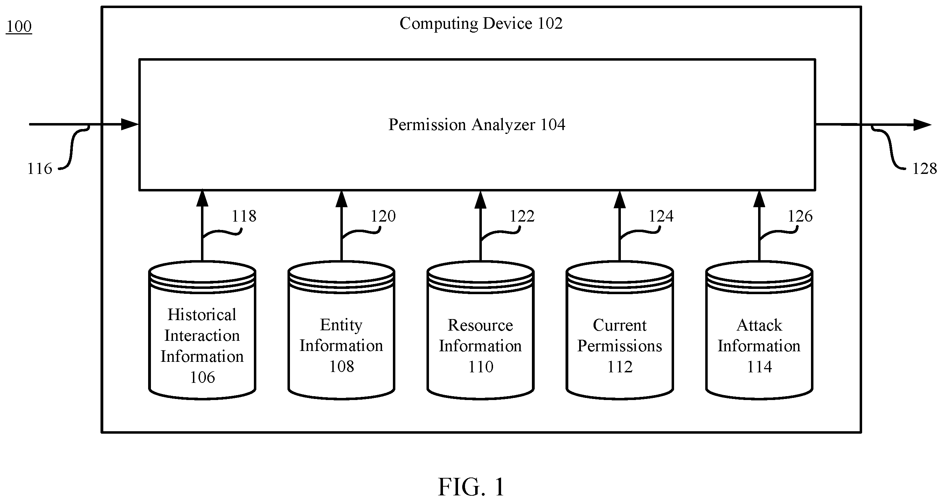

For example, FIG. 1 shows a block diagram of an example system 100 for context-aware permission reduction, in accordance with an embodiment. As shown in FIG. 1, system 100 includes a computing device 102. Computing device 102 includes a permission analyzer 104, historical interaction information storage 106, entity information storage 108, resource information storage 110, current permissions storage 112, and attack information storage 114. System 100 is described in further detail as follows.

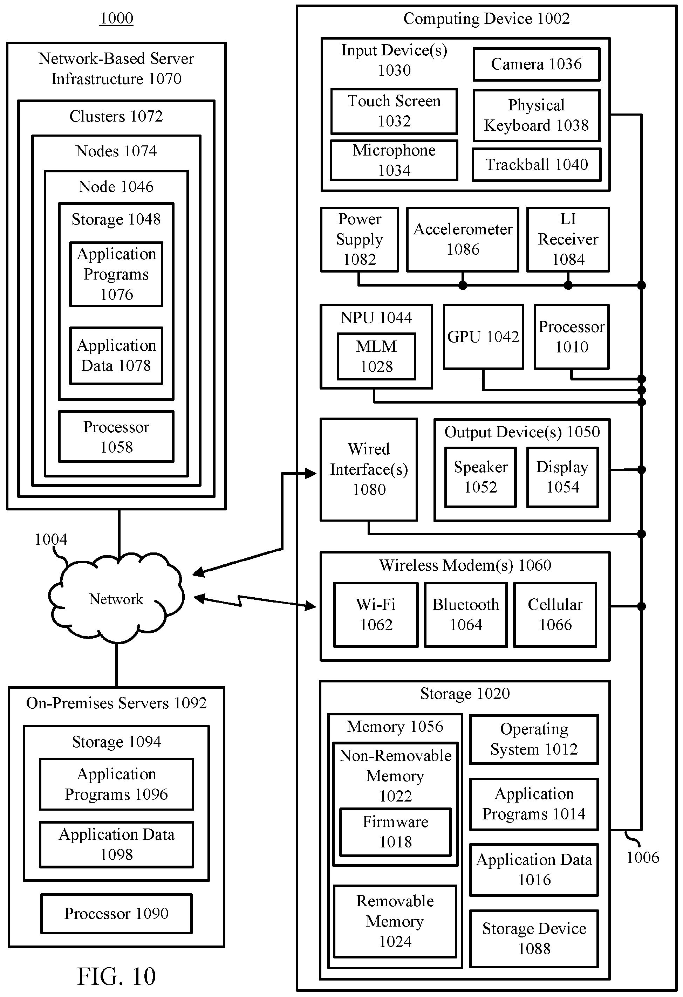

Computing device 102 include any computing device suitable for performing functions that are ascribed thereto in the following description, as will be appreciated by persons skilled in the relevant art(s), including those mentioned elsewhere herein or otherwise known. Various example implementations of server(s) 102 are described below in reference to FIG. 10 (e.g., computing device 1002, network-based server infrastructure 1070, and/or on-premises servers 1092).

Permission analyzer 104 is configured to perform context-based permission reduction for a first entity based on various factors, such as, but not limited to, historical interaction information associated with interactions between the first entity and a first resource, historical interaction information associated with interactions between the first entity and a second entity, entity information associated with the first entity, resource information associated with the first resource, current permission assignments currently assigned to the first entity, and/or attack data. In embodiments, permission analyzer 104 receives, as input, an entity identifier 116 associated with the first entity. Based on entity identifier 116, permission analyzer 104, in embodiments, retrieves historical interaction information 118 associated with the first entity from historical interaction information storage 106, entity information 120 associated with the first entity from entity information storage 108, resource information 122 associated with a first resource the first entity has interacted with from resource information storage 110, current permission set 124 associated with current permissions assigned to the first entity from current permissions storage 112, and/or attack information 126 from attack information storage 114. Based on the retrieved information, permission analyzer 104 generates an output 128, such as, but not limited to, an output to alert a user (e.g., admin, etc.) to replace the current permission set 124 with a candidate permission set, an output to prompt a user (e.g., admin, etc.) to approve replacement of the current permission set 124 with a candidate permission set, and/or an output to automatically replace the current permission set 124 with a candidate permission set.

Historical interaction information storage 106 is configured to store historical interaction information associated with interactions between an entity and a resource, and/or between an entity and another entity. In embodiments, historical interaction information storage 106 stores interactions associated with an entity, in conjunction with one or more of: a type (e.g., read, write, delete, etc.) of interaction, a resource identifier associated with a resource the entity interacted with, an entity identifier associated with a second entity the entity interacted with, and/or temporal information associated with when the interaction occurred. In embodiments, historical interaction information storage 106 returns historical interaction information 118 associated with the first entity based on a query that includes entity identifier 116.

Entity information storage 108 is configured to store, for one or more entities, an entity identifier associated with the entity in conjunction with entity information associated with the entity, such as, but not limited to, an entity type (e.g., user, user group, application, service, bot, etc.) of the entity, a role (e.g., user, administrator, etc.) of the entity, and/or a group (e.g., department, application, service, etc.) associated with the entity. In embodiments, entity information storage 108 returns entity information 120 associated with the first entity based on a query that includes entity identifier 116.

Resource information storage 110 is configured to store, for one or more resources, a resource identifier associated with the resource in conjunction with resource information associated with the resource, such as, but not limited to, a resource type (e.g., database, file, service, etc.) associated with the resource, and/or a criticality (e.g., highly critical, etc.) associated with the resource. In embodiments, resource information storage 108 returns resource information 122 associated with a first resource the first entity has interacted with based on a query that includes a resource identifier of the first resource.

Current permissions storage 112 is configured to store one or more current permission sets that are currently assigned to one or more entities. In embodiments, current permission sets stored in current permissions storage 112 specifies one or more of: a set of tasks that an entity is permitted to perform, and a resource scope that identifies the resources and/or resource groups that the entity is permitted to perform the set of tasks on. In embodiments, current permissions storage 112 returns current permission set 124 that are currently assigned to a first entity based on a query that includes entity identifier 116.

Attack information storage 114 is configured to store attack information, such as, but not limited to, current attack paths, ongoing attacks, permissions used in current attack paths and/or ongoing attacks, entities affected by current attack paths and/or ongoing attacks, and/or resources affected by current attack paths and/or ongoing attacks. In embodiments, attack information storage 114 returns attack information 126 associated with a current permission set and/or candidate permission set based on a query that includes one or more of: permission information (e.g., identifier, type, etc.), entity information (e.g., identifier, type, etc.), and/or resource information (e.g., identifier, type, etc.).

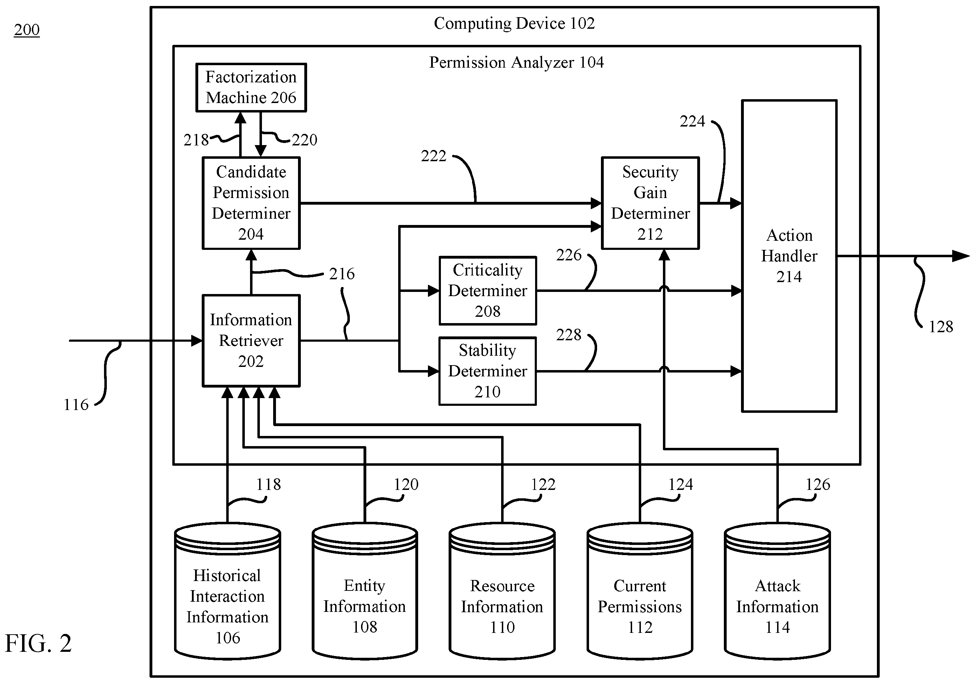

Embodiments described herein may operate in various ways to perform context-aware permission reduction using a factorization machine. For instance, FIG. 2 shows a block diagram of an example system 200 for context-aware permission reduction using a factorization machine, in accordance with an embodiment. As shown in FIG. 2, system 200 comprises computing device 102, which includes permission analyzer 104, historical interaction information storage 106, entity information storage 108, resource information storage 110, current permissions storage 112, and attack information storage 114. Additionally, permission analyzer 104 further includes an information retriever 202, a candidate permission determiner 204, a factorization machine 206, a criticality determiner 208, a stability determiner 210, a security gain determiner 212, and an action handler 214. System 200 is described in further detail as follows.

Information retriever 202 is configured to retrieve, based on entity identifier 116, historical interaction information 118 from historical interaction information storage 106, entity information 120 from entity information storage 108, resource information 122 from resource information storage 110, and/or current permission set 124 from current permissions storage 112. Information retriever 202 is further configured to provide some or all of the retrieved information as retrieved information 216 to candidate permission determiner 204, criticality determiner 208, stability determiner 210, and/or security gain determiner 212. In embodiments, candidate permission determiner 204, criticality determiner 208, stability determiner 210, and/or security gain determiner 212 retrieve historical interaction information 118, entity information 120, resource information 122, and/or current permission set 124 from historical interaction information storage 106, entity information storage 108, resource information storage 110 current permissions storage 112, respectively, and information retriever 202 is omitted from system 200.

Candidate permission determiner 204 is configured to determine a candidate permission set for a first entity based on a combination of: the actual permissions used by the first entity over a predetermined observation period, and/or a recommended permission set, generated by a machine learning model (e.g., factorization machine, etc.), that is indicative of permissions used by similar second entities when interacting with similar second resources. For instance, candidate permission determiner 204 analyzes historical information 118 to determine interactions between the first entity and first resources to determine a subset of the current permission set that the first entity actually uses, and employs factorization machine 206 to determine a recommended permission set based on entity information 120 associated with the first entity and/or resource information 122 associated with the first resources. In embodiments, candidate permission determiner 204 determines a candidate permission set 222 by combining (e.g., set union operation, etc.) the subset of the current permission set that the first entity actually uses and the recommended permission set provided by factorization machine 206, and provides candidate permission set 222 to security gain determiner 212.

Factorization machine 206 is a machine learning model configured to recommend a candidate permission set for a first entity based on how similar second entities have interacted with second resources. In embodiments, factorization machine 206 is trained based on various factors, such as, but not limited to, characteristics (e.g., identifier, type, role, group, etc.) of the second entities, characteristics (e.g., type, criticality, etc.) of the second resources, and/or interaction characteristics (e.g., type of interaction, etc.) of interactions between the second entities and second resources. For instance, factorization machine 206 is trained based on a loss function that compares the sum of pairwise dot products between the features (e.g., entity characteristic, resource characteristic, interaction characteristics, etc.) to an expected permission. In embodiments, factorization machine 206 is trained until the loss determined by the loss function satisfies of a predetermined condition (e.g., loss satisfies a threshold, loss converges, etc.). In embodiments, factorization machine 206 accepts, as input, characteristics 218 that include characteristics of a first entity and/or characteristics of first resources the first entity has interacted with, and provides a recommended permission 220 for the first entity.

Criticality determiner 208 is configured to determine a criticality score for a first entity based on various factors, such as, but not limited to, activity patterns (e.g., average active hours per day, average number of operations, etc.) associated with the first entity, interactions between the first entity and a first resource, interactions between the first entity and a second entity, characteristics (e.g., type, role, group, etc.) of the first entity, characteristics (e.g., type, criticality, etc.) of the first resource, and/or characteristics (e.g., type, role, group, etc.) of the second entity. In embodiments, criticality determiner 208 is a machine learning model trained based on labeled training data that is labeled with a criticality score and that comprises activity patterns associated with second entities, characteristics associated with the second entities, interactions between the second entities and second resources, and/or characteristics of the second resources. In embodiments, criticality determiner 206 determines a criticality score 226 based on historical interaction information 118, entity information 120, and/or resource information 122, and provides criticality score 226 to action handler 214. In embodiments, criticality determiner 208 provides criticality score 226 in various formats, such as, but not limited to, as a classification (e.g., critical, somewhat critical, not critical, etc.), as a Boolean value (e.g., 0, 1, TRUE, FALSE, etc.), and/or as a numerical value within a range of numerical values (e.g., 0-1, -1.0-1.0, etc.) indicative of a likelihood or degree of criticality.

Stability determiner 210 is configured to determine a stability score for a first entity based on various factors, such as, but not limited to, characteristics of interactions between the first entity and first resources the first entity has interacted with, characteristics of the first entity, and/or characteristics of the first resources. In embodiments, stability determiner 210 is a machine learning model trained based on training data comprising characteristics of interactions between the second entities and second resources, characteristics of the second entities and/or characteristics of the second resources. In embodiments, stability determiner 210 outputs a stability score 228 based on historical interaction information 118, entity information 120, and/or resource information 122, and provides stability score 228 to action handler 214. In embodiments, stability determiner 210 provides stability score 228 in various formats, such as, but not limited to, as a percentage (e.g., 0%-100%, 0-100, etc.), and/or as a numerical value within a range of numerical values (e.g., 0-1, 0.0-1.0, etc.) indicative of a likelihood that interactions between the first entity and the first resources will change in a subsequent period of time.

Security gain determiner 212 is configured to determine a security gain score for the first entity based on various factors, such as, but not limited to, current permission set currently assigned to the first entity, the candidate permission set to replace the current permission set, resource characteristics accessible under the current permission set, current attack paths, and/or ongoing security attacks. In embodiments, security gain determiner 212 determines a delta permission set based on a set difference between current permission set 124 and candidate permission set 222, and determines whether an attack path uses a permission in the delta permission set, a resource accessible by a permission in the delta permission set is a critical resource, and/or an ongoing security attack is associated with a permission in the delta permission set. In embodiments, security gain determiner 212 determines a security gain score 224 based on a weighted combination various factors, such as, but not limited to, a number of attack paths that uses a permission in the delta permission set, a number of critical resources accessible by a permission in the delta permission set, and/or a number of ongoing security attacks associated with a permission in the delta permission set. In embodiments, security gain determiner 212 provides security gain score 224 to action handler 214.

Action handler 214 is configured to perform an action responsive to the satisfaction of the one or more permission replacement criteria (e.g., threshold, etc.). For instance, action handler 214 determines, according to Equation 1 above, a combined score as a weighted combination of security gain score 224, criticality score 226, and/or stability score 228, and determines whether a permission replacement criterion is satisfied based on the combined score. In embodiments, when a permission replacement criterion is satisfied, action handler 214, in embodiments, replaces current permission set 124 with candidate permission set 222. In embodiments, action handler 214 performs permission set replacement automatically (e.g., without any human intervention, etc.), semi-automatically (e.g., by prompting a user for approval, etc.), and/or manually (e.g., by providing an alert and/or instructions for a user to perform the change, etc.). In embodiments, action handler 214 generates an output 128, such as, but not limited to, an output to alert a user (e.g., admin, etc.) to replace the current permission set 124 with a candidate permission set, an output to prompt a user (e.g., admin, etc.) to approve replacement of the current permission set 124 with a candidate permission set, and/or an output to automatically replace the current permission set 124 with a candidate permission set.

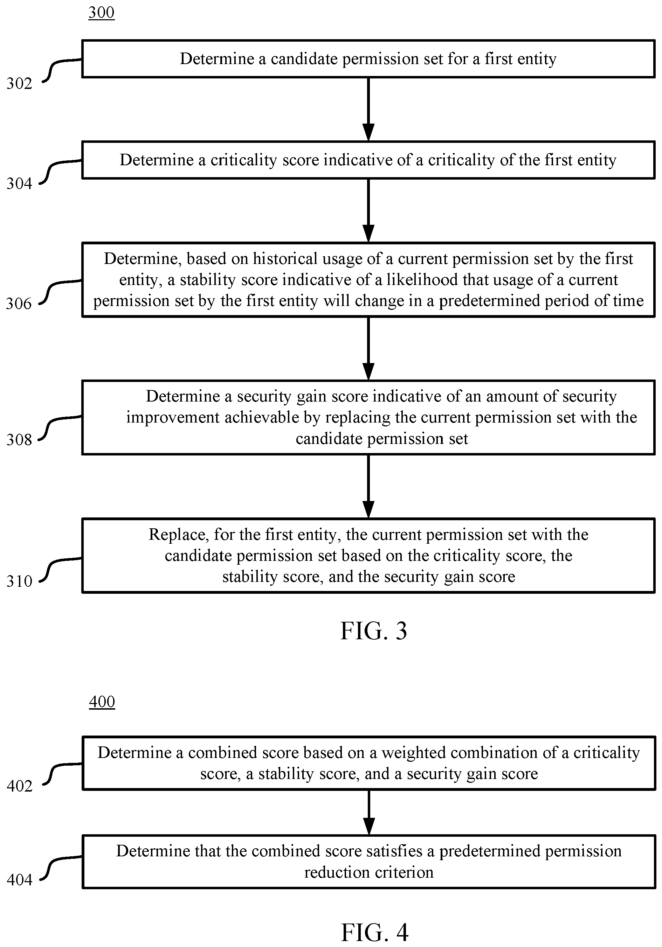

Embodiments described herein may operate in various ways to perform context-aware permission reduction. FIG. 3 depicts a flowchart 300 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 300. Note that not all steps of flowchart 300 may need to be performed in all embodiments, and in some embodiments, the steps of flowchart 300 may be performed in different orders than shown. Flowchart 300 is described as follows with respect to FIGS. 1, and 2 for illustrative purposes.

Flowchart 300 starts at step 302. In step 302, a candidate permission set is determined for a first entity. For example, candidate permission determiner 204 determines a candidate permission set for a first entity based on a combination of: the actual permissions used by the first entity over a predetermined observation period, and/or a recommended permission set, generated by factorization machine 206, that is indicative of permissions used by similar second entities when interacting with similar second resources. In embodiments, candidate permission determiner 204 analyzes historical information 118 to determine interactions between the first entity and first resources to determine a subset of the current permission set that the first entity actually uses, and employs factorization machine 206 to determine a recommended permission set based on entity information 120 associated with the first entity and/or resource information 122 associated with the first resources. In embodiments, candidate permission determiner 204 determines a candidate permission set 222 by combining (e.g., set union operation, etc.) the subset of the current permission set that the first entity actually uses and the recommended permission set provided by factorization machine 206, and provides candidate permission set 222 to security gain determiner 212.

In step 304, a criticality indicative of a criticality of the first entity is determined. For example, criticality determiner 206 determines criticality score 226 based on historical interaction information 118, entity information 120, and/or resource information 122, and provides criticality score 226 to action handler 214.

In step 306, a stability score is determined based on historical usage of a current permission set by the first entity, the stability score indicative of a likelihood that usage of a current permission set by the first entity will change in a predetermined period of time. For example, stability determiner 210 outputs stability score 228 based on historical interaction information 118, entity information 120, and/or resource information 122, and provides stability score 228 to action handler 214.

In step 308, a security gain score is determined, the security gain score indicative of an amount of security improvement achievable by replacing the current permission set with the candidate permission set. For example, security gain determiner 212 determines a delta permission set based on a set difference between current permission set 124 and candidate permission set 222, and determines a security gain score 224 based on a weighted combination factors, such as, but not limited to, a number of attack paths that uses a permission in the delta permission set, a number of critical resources accessible by a permission in the delta permission set, and/or a number of ongoing security attacks associated with a permission in the delta permission set. In embodiments, security gain determiner 212 provides security gain score 224 to action handler 214.

In step 310, the current permission set is replaced for the first entity with the candidate permission set based on the criticality score, the stability score, and the security gain score. For example, action handler 214 replaces current permission set 124 with a candidate permission set 222 when a permission replacement criterion is satisfied. In embodiments, action handler 214 performs permission set replacement automatically (e.g., without any human intervention, etc.), semi-automatically (e.g., by prompting a user for approval, etc.), and/or manually (e.g., by providing an alert and/or instructions for a user to perform the change, etc.). In embodiments, action handler 214 generates an output 128, such as, but not limited to, an output to alert a user (e.g., admin, etc.) to replace the current permission set 124 with a candidate permission set, an output to prompt a user (e.g., admin, etc.) to approve replacement of the current permission set 124 with a candidate permission set, and/or an output to automatically replace the current permission set 124 with a candidate permission set.

Embodiments described herein may operate in various ways to perform context-aware permission reduction. FIG. 4 depicts a flowchart 400 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 400. Note that not all steps of flowchart 400 may need to be performed in all embodiments, and in some embodiments, the steps of flowchart 400 may be performed in different orders than shown. Flowchart 400 is described as follows with respect to FIGS. 1, and 2 for illustrative purposes.

Flowchart 400 starts at step 402. In step 402, a combined score is determined based on a weighted combination of a criticality score, a stability score, and a security gain score. For example, action handler 214 determines, according to Equation 1, above, a combined score as a weighted combination of security gain score 224, criticality score 226, and/or stability score 228.

In step 404, the combined score is determined to satisfy a predetermined permission reduction criterion. For example, action handler 214 determines whether a permission replacement criterion is satisfied based on the combined score.

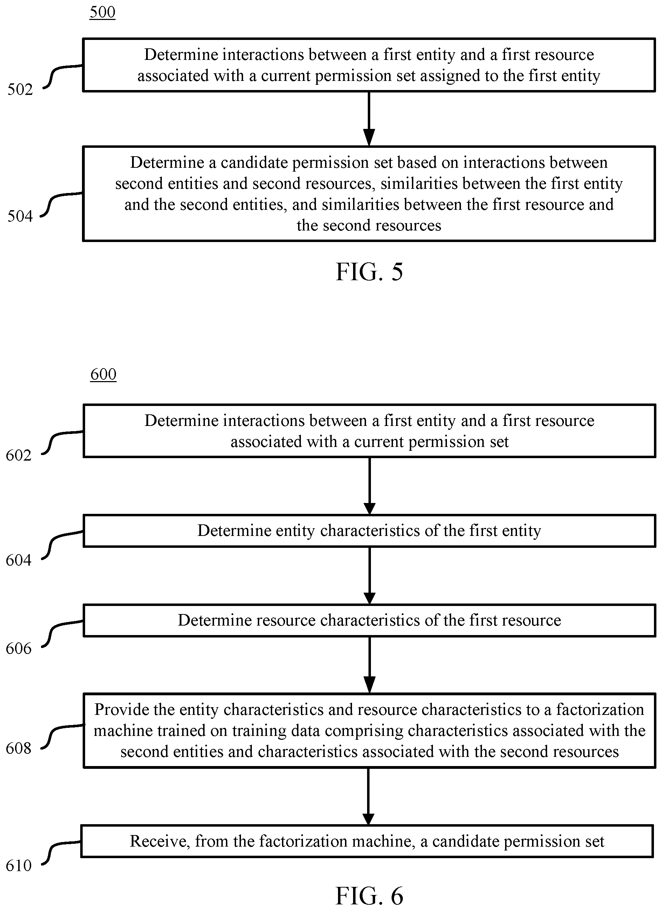

Embodiments described herein may operate in various ways to perform context-aware permission reduction. FIG. 5 depicts a flowchart 500 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 500. Note that not all steps of flowchart 500 may need to be performed in all embodiments, and in some embodiments, the steps of flowchart 500 may be performed in different orders than shown. Flowchart 500 is described as follows with respect to FIGS. 1, and 2 for illustrative purposes.

Flowchart 500 starts at step 502. In step 502, interactions between a first entity and a first resource are determined, the first resource associated with a current permission set assigned to the first entity. For example, candidate permission determiner 204 analyzes historical information 118 to determine interactions between the first entity and first resources to determine a subset of the current permission set that the first entity actually uses.

In step 504, a candidate permission set is determined based on interactions between second entities and second resources, similarities between the first entity and the second entities, and similarities between the first resource and the second resources. For example, candidate permission determiner 204 determines a candidate permission set 222 by combining (e.g., set union operation, etc.) the subset of the current permission set that the first entity actually uses and the recommended permission set provided by factorization machine 206.

Embodiments described herein may operate in various ways to perform context-aware permission reduction. FIG. 6 depicts a flowchart 600 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 600. Note that not all steps of flowchart 600 may need to be performed in all embodiments, and in some embodiments, the steps of flowchart 600 may be performed in different orders than shown. Flowchart 600 is described as follows with respect to FIGS. 1, and 2 for illustrative purposes.

Flowchart 600 starts at step 602. In step 602, interactions between a first entity and a first resource are determined, the first resource associated with a current permission set assigned to the first entity. For example, candidate permission determiner 204 analyzes historical information 118 to determine interactions between the first entity and first resources.

In step 604, entity characteristics of the first entity are determined. For example, candidate permission determiner 204 analyzes entity information 120 to determine characteristics of the first entity.

In step 606, resource characteristics of the first resource are determined. For example, candidate permission determiner 204 analyzes resource information 122 to determine characteristics of the first resources the first entity interacted with.

In step 608, the entity characteristics and resource characteristics are provided to a factorization machine trained on training data comprising characteristics associated with the second entities and characteristics associated with the second resources. For example, candidate permission determiner 204 provides, as characteristics 218, the characteristics of the fist entity and characteristics of the first resources to factorization machine 206.

In step 610, a candidate permission set is received from the factorization machine. For example, candidate permission determiner 204 receives, from factorization machine 206, recommended permission set 220. For example candidate permission determiner 204 determines candidate permission set 222 based at least in part on recommended permission set 220.

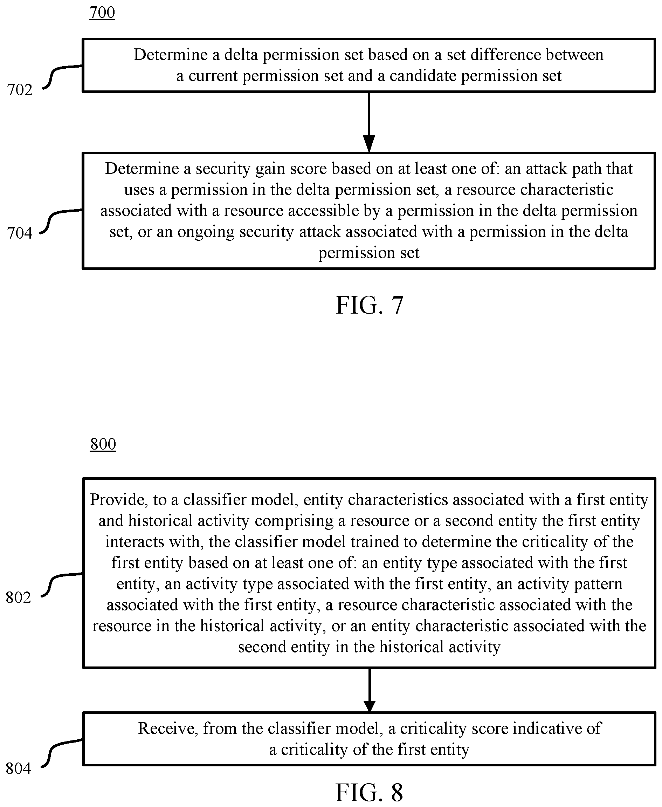

Embodiments described herein may operate in various ways to perform context-aware permission reduction. FIG. 7 depicts a flowchart 700 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 700. Note that not all steps of flowchart 700 may need to be performed in all embodiments, and in some embodiments, the steps of flowchart 700 may be performed in different orders than shown. Flowchart 700 is described as follows with respect to FIGS. 1, and 2 for illustrative purposes.

Flowchart 700 starts at step 702. In step 702, a delta permission set is determined based on a set difference between a current permission set and a candidate permission set. For example, security gain determiner 212 determines a delta permission set based on a set difference between current permission set 124 and candidate permission set 222.

In step 704, a security gain score is determined based on at least one of: an attack path that uses a permission in the delta permission set, a resource characteristic associated with a resource accessible by a permission in the delta permission set, or an ongoing security attack associated with a permission in the delta permission set. For example, security gain determiner 212 determines a security gain score 224 based on a weighted combination various factors, such as, but not limited to, a number of attack paths that uses a permission in the delta permission set, a number of critical resources accessible by a permission in the delta permission set, and/or a number of ongoing security attacks associated with a permission in the delta permission set.

Embodiments described herein may operate in various ways to perform context-aware permission reduction. FIG. 8 depicts a flowchart 800 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 800. Note that not all steps of flowchart 800 may need to be performed in all embodiments, and in some embodiments, the steps of flowchart 800 may be performed in different orders than shown. Flowchart 800 is described as follows with respect to FIGS. 1, and 2 for illustrative purposes.

Flowchart 800 starts at step 802. In step 802, entity characteristics associated with a first entity and historical activity comprising a resource or a second entity the first entity interacts with are provided to a classifier model, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity. For example, historical interaction information 118, entity information 120, and/or resource information 122 are provided to criticality determiner 208. In embodiments, criticality determiner 208 is a machine learning model trained based on labeled training data that is labeled with a criticality score and that comprises activity patterns associated with second entities, characteristics associated with the second entities, interactions between the second entities and second resources, and/or characteristics of the second resources.

In step 804, a criticality score indicative of a criticality of the first entity is received from the classifier model. For example, criticality determiner 208 provides criticality score 226 to action handler 214.

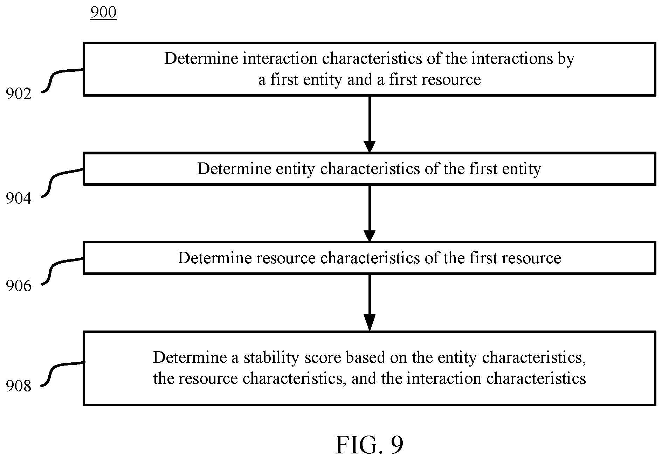

Embodiments described herein may operate in various ways to perform context-aware permission reduction. FIG. 9 depicts a flowchart 900 of a process for context-aware permission reduction, in accordance with an embodiment. Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, and/or action handler 214 may, for example, operate according to flowchart 900. Note that not all steps of flowchart 900 may need to be performed in all embodiments, and in some embodiments, the steps of flowchart 900 may be performed in different orders than shown. Flowchart 900 is described as follows with respect to FIGS. 1, and 2 for illustrative purposes.

Flowchart 900 starts at step 902. In step 902, interaction characteristics of interactions between a first entity and a first resource are determined. For example, stability determiner 210 analyzes historical interaction information 118 to determine interaction characteristics therefrom.

In step 904, entity characteristics of the first entity are determined. For example, stability determiner 210 analyzes entity information 120 to determine entity characteristics therefrom.

In step 906, resource characteristics of the first resource are determined. For example, stability determiner 210 analyzes resource information 122 to determine resource characteristics therefrom.

In step 908, a stability score is determined based on the entity characteristics, the resource characteristics, and the interaction characteristics. For example, stability determiner 210 determines, based on historical interaction information 118, entity information 120, and/or resource information 122, a stability score 228 indicative of a likelihood that interactions between the first entity and a first resources will change in a subsequent period of time.

III. Example Mobile Device and Computer System Implementation

Computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, action handler 214, and/or components described therein, and/or the steps of flowcharts 300, 400, 500, 600, 700, 800, and/or 900 are implemented in hardware, or hardware combined with one or both of software and/or firmware. For example, computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, action handler 214, and/or components described therein, and/or the steps of flowcharts 300, 400, 500, 600, 700, 800, and/or 900 are each implemented as computer program code/instructions configured to be executed in one or more processors and stored in a computer readable storage medium. Alternatively, computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, action handler 214, and/or components described therein, and/or the steps of flowcharts 300, 400, 500, 600, 700, 800, and/or 900 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 10. FIG. 10 shows a block diagram of an exemplary computing environment 1000 that includes a computing device 1002. Computing device 1002 is an example of computing device 102 and/or components thereof, which each include one or more of the components of computing device 1002. In some embodiments, computing device 1002 is communicatively coupled with devices (not shown in FIG. 10) external to computing environment 1000 via network 1004. Network 1004 comprises one or more networks such as local area networks (LANs), wide area networks (WANs), enterprise networks, the Internet, etc. In examples, network 1004 includes one or more wired and/or wireless portions. In some examples, network 1004 additionally or alternatively includes a cellular network for cellular communications. Computing device 1002 is described in detail as follows.

Computing device 1002 can be any of a variety of types of computing devices. Examples of computing device 1002 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1002 is a stationary computing device such as a desktop computer, a personal computer (PC), a stationary server device, a minicomputer, a mainframe, a supercomputer, etc.

As shown in FIG. 10, computing device 1002 includes a variety of hardware and software components, including a processor 1010, a storage 1020, a graphics processing unit (GPU) 1042, a neural processing unit (NPU) 1044, one or more input devices 1030, one or more output devices 1050, one or more wireless modems 1060, one or more wired interfaces 1080, a power supply 1082, a location information (LI) receiver 1084, and an accelerometer 1086. Storage 1020 includes memory 1056, which includes non-removable memory 1022 and removable memory 1024, and a storage device 1088. Storage 1020 also stores an operating system 1012, application programs 1014, and application data 1016. Wireless modem(s) 1060 include a Wi-Fi modem 1062, a Bluetooth modem 1064, and a cellular modem 1066. Output device(s) 1050 includes a speaker 1052 and a display 1054. Input device(s) 1030 includes a touch screen 1032, a microphone 1034, a camera 1036, a physical keyboard 1038, and a trackball 1040. Not all components of computing device 1002 shown in FIG. 10 are present in all embodiments, additional components not shown may be present, and in a particular embodiment any combination of the components are present. In examples, components of computing device 1002 are mounted to a circuit card (e.g., a motherboard) of computing device 1002, integrated in a housing of computing device 1002, or otherwise included in computing device 1002. The components of computing device 1002 are described as follows.

In embodiments, a single processor 1010 (e.g., central processing unit (CPU), microcontroller, a microprocessor, signal processor, ASIC (application specific integrated circuit), and/or other physical hardware processor circuit) or multiple processors 1010 are present in computing device 1002 for performing such tasks as program execution, signal coding, data processing, input/output processing, power control, and/or other functions. In examples, processor 1010 is a single-core or multi-core processor, and each processor core is single-threaded or multithreaded (to provide multiple threads of execution concurrently). Processor 1010 is configured to execute program code stored in a computer readable medium, such as program code of operating system 1012 and application programs 1014 stored in storage 1020. The program code is structured to cause processor 1010 to perform operations, including the processes/methods disclosed herein. Operating system 1012 controls the allocation and usage of the components of computing device 1002 and provides support for one or more application programs 1014 (also referred to as "applications" or "apps"). In examples, application programs 1014 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1010 includes one or more general processors (e.g., CPUs) configured with or coupled to one or more hardware accelerators, such as one or more NPUs 1044 and/or one or more GPUs 1042.

Any component in computing device 1002 can communicate with any other component according to function, although not all connections are shown for ease of illustration. For instance, as shown in FIG. 10, bus 1006 is a multiple signal line communication medium (e.g., conductive traces in silicon, metal traces along a motherboard, wires, etc.) present to communicatively couple processor 1010 to various other components of computing device 1002, although in other embodiments, an alternative bus, further buses, and/or one or more individual signal lines is/are present to communicatively couple components. Bus 1006 represents one or more of any of several types of bus structures, including a memory bus or memory controller, a peripheral bus, an accelerated graphics port, and a processor or local bus using any of a variety of bus architectures.

Storage 1020 is physical storage that includes one or both of memory 1056 and storage device 1088, which store operating system 1012, application programs 1014, and application data 1016 according to any distribution. Non-removable memory 1022 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1022 includes main memory and is separate from or fabricated in a same integrated circuit as processor 1010. As shown in FIG. 10, non-removable memory 1022 stores firmware 1018 that is present to provide low-level control of hardware. Examples of firmware 1018 include BIOS (Basic Input/Output System, such as on personal computers) and boot firmware (e.g., on smart phones). In examples, removable memory 1024 is inserted into a receptacle of or is otherwise coupled to computing device 1002 and can be removed by a user from computing device 1002. Removable memory 1024 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1088 are present that are internal and/or external to a housing of computing device 1002 and are or are not removable. Examples of storage device 1088 include a hard disk drive, a SSD, a thumb drive (e.g., a USB (Universal Serial Bus) flash drive), or other physical storage device.

One or more programs are stored in storage 1020. Such programs include operating system 1012, one or more application programs 1014, and other program modules and program data. Examples of such application programs include computer program logic (e.g., computer program code/instructions) for implementing computing device 102, permission analyzer 104, historical interaction information storage 106, entity information storage 108, resource information storage 110, current permissions storage 112, attack information storage 114, information retriever 202, candidate permission determiner 204, factorization machine 206, criticality determiner 208, stability determiner 210, security gain determiner 212, action handler 214, and/or components described therein, as well as any of flowcharts 300, 400, 500, 600, 700, 800, 900, and/or any individual steps thereof.

Storage 1020 also stores data used and/or generated by operating system 1012 and application programs 1014 as application data 1016. Examples of application data 1016 include web pages, text, images, tables, sound files, video data, and other data. In examples, application data 1016 is sent to and/or received from one or more network servers or other devices via one or more wired or wireless networks. Storage 1020 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1002 through one or more input devices 1030 and receives information from computing device 1002 through one or more output devices 1050. Input device(s) 1030 includes one or more of touch screen 1032, microphone 1034, camera 1036, physical keyboard 1038 and/or trackball 1040 and output device(s) 1050 includes one or more of speaker 1052 and display 1054. Each of input device(s) 1030 and output device(s) 1050 are integral to computing device 1002 (e.g., built into a housing of computing device 1002) or are external to computing device 1002 (e.g., communicatively coupled wired or wirelessly to computing device 1002 via wired interface(s) 1080 and/or wireless modem(s) 1060). Further input devices 1030 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1054 displays information, as well as operating as touch screen 1032 by receiving user commands and/or other information (e.g., by touch, finger gestures, virtual keyboard, etc.) as a user interface. Any number of each type of input device(s) 1030 and output device(s) 1050 are present, including multiple microphones 1034, multiple cameras 1036, multiple speakers 1052, and/or multiple displays 1054.

In embodiments where GPU 1042 is present, GPU 1042 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1042 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1044 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1028. In an example, NPU 1044 is configured for a data-driven parallel computing and is highly efficient at processing massive multimedia data such as videos and images and processing data for neural networks. NPU 1044 is configured for efficient handling of AI-related tasks, such as speech recognition, background blurring in video calls, photo or video editing processes like object detection, etc.

In embodiments disclosed herein that implement ML models, NPU 1044 can be utilized to execute such ML models, of which MLM 1028 is an example. For instance, where applicable, MLM 1028 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1044 is used to train MLM 1028. To train MLM 1028, training data is that includes input features (attributes) and their corresponding output labels/target values (e.g., for supervised learning) is collected. A training algorithm is a computational procedure that is used so that MLM 1028 learns from the training data. Parameters/-weights are internal settings of MLM 1028 that are adjusted during training by the training algorithm to reduce a difference between predictions by MLM 1028 and actual outcomes (e.g., output labels). In some examples, MLM 1028 is set with initial values for the parameters/weights. A loss function measures a dissimilarity between predictions by MLM 1028 and the target values, and the parameters/weights of MLM 1028 are adjusted to minimize the loss function. The parameters/-weights are iteratively adjusted by an optimization technique, such as gradient descent. In this manner, MLM 1028 is generated through training by NPU 1044 to be used to generate inferences based on received input feature sets for particular applications. MLM 1028 is generated as a computer program or other type of algorithm configured to generate an output (e.g., a classification, a prediction/inference) based on received input features, and is stored in the form of a file or other data structure.

In examples, such training of MLM 1028 by NPU 1044 is supervised or unsupervised. According to supervised learning, input objects (e.g., a vector of predictor variables) and a desired output value (e.g., a human-labeled supervisory signal) train MLM 1028. The training data is processed, building a function that maps new data on expected output values. Example algorithms usable by NPU 1044 to perform supervised training of MLM 1028 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 1028 is an LLM, MLM 1028 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1028 is trained to learn patterns from unlabeled data. For instance, in embodiments where MLM 1028 implements unsupervised learning techniques, MLM 1028 identifies one or more classifications or clusters to which an input belongs. During a training phase of MLM 1028 according to unsupervised learning, MLM 1028 tries to mimic the provided training data and uses the error in its mimicked output to correct itself (i.e., correct weights and biases). In further examples, NPU 1044 perform unsupervised training of MLM 1028 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1044 need not necessarily be present in all ML model embodiments. In embodiments where ML models are present, any one or more of processor 1010, GPU 1042, and/or NPU 1044 can be present to train and/or execute MLM 1028.

One or more wireless modems 1060 can be coupled to antenna(s) (not shown) of computing device 1002 and can support two-way communications between processor 1010 and devices external to computing device 1002 through network 1004, as would be understood to persons skilled in the relevant art(s). Wireless modem 1060 is shown generically and can include a cellular modem 1066 for communicating with one or more cellular networks, such as a GSM network for data and voice communications within a single cellular network, between cellular networks, or between the mobile device and a public switched telephone network (PSTN). In examples, wireless modem 1060 also or alternatively includes other radio-based modem types, such as a Bluetooth modem 1064 (also referred to as a "Bluetooth device") and/or Wi-Fi modem 1062 (also referred to as an "wireless adaptor"). Wi-Fi modem 1062 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1064 is configured to communicate with another Bluetooth-capable device according to the Bluetooth short-range wireless technology standard(s) such as IEEE 802.15.1 and/or managed by the Bluetooth Special Interest Group (SIG).

Computing device 1002 can further include power supply 1082, LI receiver 1084, accelerometer 1086, and/or one or more wired interfaces 1080. Example wired interfaces 1080 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1080 of computing device 1002 provide for wired connections between computing device 1002 and network 1004, or between computing device 1002 and one or more devices/peripherals when such devices/peripherals are external to computing device 1002 (e.g., a pointing device, display 1054, speaker 1052, camera 1036, physical keyboard 1038, etc.). Power supply 1082 is configured to supply power to each of the components of computing device 1002 and receives power from a battery internal to computing device 1002, and/or from a power cord plugged into a power port of computing device 1002 (e.g., a USB port, an A/C power port). LI receiver 1084 is useable for location determination of computing device 1002 and in examples includes a satellite navigation receiver such as a Global Positioning System (GPS) receiver and/or includes other type of location determiner configured to determine location of computing device 1002 based on received information (e.g., using cell tower triangulation, etc.). Accelerometer 1086, when present, is configured to determine an orientation of computing device 1002.

Note that the illustrated components of computing device 1002 are not required or all-inclusive, and fewer or greater numbers of components can be present as would be recognized by one skilled in the art. In examples, computing device 1002 includes one or more of a gyroscope, barometer, proximity sensor, ambient light sensor, digital compass, etc. In an example, processor 1010 and memory 1056 are co-located in a same semiconductor device package, such as being included together in an integrated circuit chip, FPGA, or system-on-chip (SOC), optionally along with further components of computing device 1002.

In embodiments, computing device 1002 is configured to implement any of the above-described features of flowcharts herein. Computer program logic for performing any of the operations, steps, and/or functions described herein is stored in storage 1020 and executed by processor 1010.

In some embodiments, server infrastructure 1070 is present in computing environment 1000 and is communicatively coupled with computing device 1002 via network 1004. Server infrastructure 1070, when present, is a network-accessible server set (e.g., a cloud-based environment or platform). As shown in FIG. 10, server infrastructure 1070 includes clusters 1072. Each of clusters 1072 comprises a group of one or more compute nodes and/or a group of one or more storage nodes. For example, as shown in FIG. 10, cluster 1072 includes nodes 1074. Each of nodes 1074 are accessible via network 1004 (e.g., in a "cloud-based" embodiment) to build, deploy, and manage applications and services. In examples, any of nodes 1074 is a storage node that comprises a plurality of physical storage disks, SSDs, and/or other physical storage devices that are accessible via network 1004 and are configured to store data associated with the applications and services managed by nodes 1074.

Each of nodes 1074, as a compute node, comprises one or more server computers, server systems, and/or computing devices. For instance, a node 1074 in accordance with an embodiment includes one or more of the components of computing device 1002 disclosed herein. Each of nodes 1074 is configured to execute one or more software applications (or "applications") and/or services and/or manage hardware resources (e.g., processors, memory, etc.), which are utilized by users (e.g., customers) of the network-accessible server set. In examples, as shown in FIG. 10, nodes 1074 includes a node 1046 that includes storage 1048 and/or one or more of a processor 1058 (e.g., similar to processor 1010, GPU 1042, and/or NPU 1044 of computing device 1002). Storage 1048 stores application programs 1076 and application data 1078. Processor(s) 1058 operate application programs 1076 which access and/or generate related application data 1078. In an implementation, nodes such as node 1046 of nodes 1074 operate or comprise one or more virtual machines, with each virtual machine emulating a system architecture (e.g., an operating system), in an isolated manner, upon which applications such as application programs 1076 are executed.

In embodiments, one or more of clusters 1072 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1072 are included in a datacenter in a distributed collection of datacenters. In embodiments, exemplary computing environment 1000 comprises part of a cloud-based platform.

In an embodiment, computing device 1002 accesses application programs 1076 for execution in any manner, such as by a client application and/or a browser at computing device 1002.

In an example, for purposes of network (e.g., cloud) backup and data security, computing device 1002 additionally and/or alternatively synchronizes copies of application programs 1014 and/or application data 1016 to be stored at network-based server infrastructure 1070 as application programs 1076 and/or application data 1078. In examples, operating system 1012 and/or application programs 1014 include a file hosting service client configured to synchronize applications and/or data stored in storage 1020 at network-based server infrastructure 1070.

In some embodiments, on-premises servers 1092 are present in computing environment 1000 and are communicatively coupled with computing device 1002 via network 1004. On-premises servers 1092, when present, are hosted within an organization's infrastructure and, in many cases, physically onsite of a facility of that organization. On-premises servers 1092 are controlled, administered, and maintained by IT (Information Technology) personnel of the organization or an IT partner to the organization. Application data 1098 can be shared by on-premises servers 1092 between computing devices of the organization, including computing device 1002 (when part of an organization) through a local network of the organization, and/or through further networks accessible to the organization (including the Internet). Furthermore, in examples, on-premises servers 1092 serve applications such as application programs 1096 to the computing devices of the organization, including computing device 1002. Accordingly, in examples, on-premises servers 1092 include storage 1094 (which includes one or more physical storage devices such as storage disks and/or SSDs) for storage of application programs 1096 and application data 1098 and include a processor 1090 (e.g., similar to processor 1010, GPU 1042, and/or NPU 1044 of computing device 1002) for execution of application programs 1096. In some embodiments, multiple processors 1090 are present for execution of application programs 1096 and/or for other purposes. In further examples, computing device 1002 is configured to synchronize copies of application programs 1014 and/or application data 1016 for backup storage at on-premises servers 1092 as application programs 1096 and/or application data 1098.

Embodiments described herein may be implemented in one or more of computing device 1002, network-based server infrastructure 1070, and on-premises servers 1092. For example, in some embodiments, computing device 1002 is used to implement systems, clients, or devices, or components/subcomponents thereof, disclosed elsewhere herein. In other embodiments, a combination of computing device 1002, network-based server infrastructure 1070, and/or on-premises servers 1092 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1020. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1014) are stored in storage 1020. Such computer programs can also be received via wired interface(s) 1060 and/or wireless modem(s) 1060 over network 1004. Such computer programs, when executed or loaded by an application, enable computing device 1002 to implement features of embodiments discussed herein. Accordingly, such computer programs represent controllers of the computing device 1002.

Embodiments are also directed to computer program products comprising computer code or instructions stored on any computer-readable medium or computer-readable storage medium. Such computer program products include the physical storage of storage 1020 as well as further physical storage types.

IV. Additional Example Embodiments

In embodiments, a method comprises: determining a candidate permission set for a first entity; determining a criticality score indicative of a criticality of the first entity; determining, based on historical usage of a current permission set by the first entity, a stability score indicative of a likelihood that usage of a current permission set by the first entity will change in a predetermined period of time; determining a security gain score indicative of an amount of security improvement achievable by replacing the current permission set with the candidate permission set; and replacing, for the first entity, the current permission set with the candidate permission set based on at least one of: the criticality score, the stability score, or the security gain score.

In embodiments, replacing, for the first entity, the current permission set with the candidate permission set comprises: determining a combined score based on a weighted combination of the criticality score, the stability score, and the security gain score; and determining that the combined score satisfies a predetermined permission reduction criterion.

In embodiments, determining a security gain score comprises: determining a delta permission set based on a set difference between the current permission set and the candidate permission set; determining the security gain score based on at least one of: an attack path that uses a permission in the delta permission set, a resource characteristic associated with a resource accessible by a permission in the delta permission set, or an ongoing security attack associated with a permission in the delta permission set.

In embodiments, determining a criticality score comprises: providing, to a classifier model, entity characteristics associated with the first entity and historical activity comprising a resource or a second entity the first entity interacts with, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity; and receiving, from the classifier model, the criticality score.

In embodiments, determining, based on historical usage of a current permission set by the first entity, a stability score comprises: determining interaction characteristics of the interactions between the first entity and a first resource; determining entity characteristics of the first entity; determining resource characteristics of the first resource; and determining the stability score based on the entity characteristics, the resource characteristics, and the interaction characteristics.

In embodiments, determining a candidate permission set for a first entity comprises: determining interactions between the first entity and a first resource associated with the current permission set; and determining the candidate permission set based on interactions between second entities and second resources, similarities between the first entity and the second entities, and similarities between the first resource and the second resources.

In embodiments, determining the candidate permission set based on interactions between second entities and second resources, similarities between the first entity and the second entities, and similarities between the first resource and the second resources comprises: determining entity characteristics of the first entity; determining resource characteristics of the first resource; providing the entity characteristics and resource characteristics to a factorization machine trained on training data comprising characteristics associated with the second entities and characteristics associated with the second resources; and receiving, from the factorization machine, the candidate permission set.

In embodiments, a system comprises: a processor; a memory device that stores program code structured to cause the processor to: determine a candidate permission set for a first entity; determine, based on historical usage of a current permission set by the first entity, a stability score indicative of a likelihood that usage of a current permission set by the first entity will change in a predetermined period of time; determine a security gain score indicative of an amount of security improvement achievable by replacing the current permission set with the candidate permission set; and replace, for the first entity, the current permission set with the candidate permission set based on the stability score, and the security gain score.

In embodiments, to replace, for the first entity, the current permission set with the candidate permission set, the program code is structured to cause the processor to: determine a combined score based on a weighted combination of the criticality score, the stability score, and the security gain score; and determine that the combined score satisfies a predetermined permission reduction criterion.

In embodiments, to determine the security gain score, the program code is structured to cause the processor to: determine a delta permission set based on a set difference between the current permission set and the candidate permission set; and determine the security gain score based on at least one of: an attack path that uses a permission in the delta permission set, a resource characteristic associated with a resource accessible by a permission in the delta permission set, or an ongoing security attack associated with a permission in the delta permission set.

In embodiments, the program code is structured to further cause the processor to: provide, to a classifier model, entity characteristics associated with the first entity and historical activity comprising a resource or a second entity the first entity interacts with, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity; and receive, from the classifier model, a criticality score indicative of the criticality of the first entity, wherein the program code is structured to further cause the processor to replace, for the first entity, the current permission set with the candidate permission set further based on the criticality score.

In embodiments, to determine, based on historical usage of a current permission set by the first entity, a stability score, the program code is structured to cause the processor to: determine interaction characteristics of the interactions between the first entity and a first resource; determine entity characteristics of the first entity; determine resource characteristics of the first resource; and determine the stability score based on the entity characteristics, the resource characteristics, and the interaction characteristics.

In embodiments, to determine the candidate permission set for the first entity, the program code is structured to cause the processor to: determine interactions between the first entity and a first resource associated with the current permission set; and determine the candidate permission set based on interactions between second entities and second resources, similarities between the first entity and the second entities, and similarities between the first resource and the second resources.

In embodiments, to determine the candidate permission set based on interactions between second entities and second resources, similarities between the first entity and the second entities, and similarities between the first resource and the second resources, the program code is structured to cause the processor to: determine entity characteristics of the first entity; determine resource characteristics of the first resource; provide the entity characteristics and resource characteristics to a factorization machine trained on training data comprising characteristics associated with the second entities and characteristics associated with the second resources; and receive, from the factorization machine, the candidate permission set.

In embodiments, a computer-readable storage medium comprising executable instructions that, when executed by a processor, causes the processor to: determine a candidate permission set for a first entity; determine a criticality score indicative of a criticality of the first entity; determine, based on historical usage of a current permission set by the first entity, a stability score indicative of a likelihood that usage of a current permission set by the first entity will change in a predetermined period of time; determine a security gain score indicative of an amount of security improvement achievable by replacing the current permission set with the candidate permission set; and replace, for the first entity, the current permission set with the candidate permission set based on the criticality score, the stability score, and the security gain score.

In embodiments, to replace, for the first entity, the current permission set with the candidate permission set, the executable instructions, when executed by the processor, cause the processor to: determine a combined score based on a weighted combination of the criticality score, the stability score, and the security gain score; and determine that the combined score satisfies a predetermined permission reduction criterion.

In embodiments, to determine the security gain score, the executable instructions, when executed by the processor, cause the processor to: determine a delta permission set based on a set difference between the current permission set and the candidate permission set; and determine the security gain score based on at least one of: an attack path that uses a permission in the delta permission set, a resource characteristic associated with a resource accessible by a permission in the delta permission set, or an ongoing security attack associated with a permission in the delta permission set.

In embodiments, to determine the criticality score, the executable instructions, when executed by the processor, cause the processor to: provide, to a classifier model, entity characteristics associated with the first entity and historical activity comprising a resource or a second entity the first entity interacts with, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity; and receive, from the classifier model, the criticality score.

In embodiments, to determine, based on historical usage of a current permission set by the first entity, a stability score, the executable instructions, when executed by the processor, cause the processor to: determine interaction characteristics of the interactions between the first entity and a first resource; determine entity characteristics of the first entity; determine resource characteristics of the first resource; and determine the stability score based on the entity characteristics, the resource characteristics, and the interaction characteristics.

In embodiments, to determine the candidate permission set for the first entity, the executable instructions, when executed by the processor, cause the processor to: determine interactions between the first entity and a first resource associated with the current permission set; and determine the candidate permission set based on interactions between second entities and second resources, similarities between the first entity and the second entities, and similarities between the first resource and the second resources.

V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the scope of the invention as defined in the appended claims. Accordingly, the breadth and scope of the present invention should not be limited by any of the above-described exemplary embodiments, but should be defined only in accordance with the following claims and their equivalents.

**Claims**

1. A method (300) comprising:

   determining (302) a candidate permission set for a first entity;
   determining (304) a criticality score indicative of a criticality of the first entity;
   determining (306), based on historical usage of a current permission set by the first entity, a stability score indicative of a likelihood that usage of a current permission set by the first entity will change in a predetermined period of time;
   determining (308) a security gain score indicative of an amount of security improvement achievable by replacing the current permission set with the candidate permission set; and
   replacing (310), for the first entity, the current permission set with the candidate permission set based on at least one of: the criticality score, the stability score, or the security gain score.

2. The method of claim 1, wherein said replacing, for the first entity, the current permission set with the candidate permission set comprises:

   determining a combined score based on a weighted combination of the criticality score, the stability score, and the security gain score; and
   determining that the combined score satisfies a predetermined permission reduction criterion.

3. The method of claim 1 or claim 2, wherein said determining a security gain score comprises:

   determining a delta permission set based on a set difference between the current permission set and the candidate permission set;
   determining the security gain score based on at least one of: an attack path that uses a permission in the delta permission set, a resource characteristic associated with a resource accessible by a permission in the delta permission set, or an ongoing security attack associated with a permission in the delta permission set.

4. The method of any one of claims 1 to 3, wherein said determining a criticality score comprises:

   providing, to a classifier model, entity characteristics associated with the first entity and historical activity comprising a resource or a second entity the first entity interacts with, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity; and
   receiving, from the classifier model, the criticality score.

5. The method of any one of claims 1 to 4, wherein said determining, based on historical usage of a current permission set by the first entity, a stability score comprises:

   determining interaction characteristics of the interactions between the first entity and a first resource;
   determining entity characteristics of the first entity;

determining resource characteristics of the first resource; and

determining the stability score based on the entity characteristics, the resource characteristics, and the interaction characteristics.

6. The method of any one of claims 1 to 5, wherein said determining a candidate permission set for a first entity comprises:

determining interactions between the first entity and a first resource associated with the current permission set; and

determining the candidate permission set based on interactions between second entities and second resources, similarities between the first entity and the second entities, and similarities between the first resource and the second resources.

7. The method of claim 6, wherein said determining the candidate permission set based on interactions between second entities and second resources, similarities between the first entity and the second entities, and similarities between the first resource and the second resources comprises:

determining entity characteristics of the first entity;

determining resource characteristics of the first resource;

providing the entity characteristics and resource characteristics to a factorization machine trained on training data comprising characteristics associated with the second entities and characteristics associated with the second resources; and

receiving, from the factorization machine, the candidate permission set.

8. A system (100, 200, 1002, 1070, 1092) comprising:

a processor (1010, 1042, 1044, 1058, 1090);

a memory device (1020, 1048, 1094) that stores program code (1014, 1076, 1096) structured to cause the processor (1010, 1042, 1044, 1058, 1090) to:

determine (302) a candidate permission set (222) for a first entity (116);

determine (306), based on historical usage of a current permission set (124) by the first entity (116), a stability score (228) indicative of a likelihood that usage of a current permission set (124) by the first entity (116) will change in a predetermined period of time;

determine (308) a security gain score (224) indicative of an amount of security improvement achievable by replacing the current permission set (124) with the candidate permission set (222); and

replace (310), for the first entity (116), the current permission set (124) with the candidate permission set (222) based on at least one of: the stability score (228), or the security gain score (224).

9. The system of claim 8, wherein to replace, for the first entity, the current permission set with the candidate permission set, the program code is structured to cause the processor to:

determine a combined score based on a weighted combination of the stability score, and the security gain score; and

determine that the combined score satisfies a predetermined permission reduction criterion.

10. The system of claim 8 or claim 9, wherein to determine the security gain score, the program code is structured to cause the processor to:

determine a delta permission set based on a set difference between the current permission set and the candidate permission set; and

determine the security gain score based on at least one of: an attack path that uses a permission in the delta permission set, a resource characteristic associated with a resource accessible by a permission in the delta permission set, or an ongoing security attack associated with a permission in the delta permission set.

11. The system of any one of claims 8 to 10, wherein the program code is structured to further cause the processor to:

provide, to a classifier model, entity characteristics associated with the first entity and historical activity comprising a resource or a second entity the first entity interacts with, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity; and

receive, from the classifier model, a criticality score indicative of the criticality of the first entity, wherein the program code is structured to further cause the processor to replace, for the first entity, the current permission set with the candidate permission set further based on the criticality score.

12. The system of any one of claims 8 to 11, wherein to determine, based on historical usage of a current permission set by the first entity, a stability score, the program code is structured to cause the processor to:

determine interaction characteristics of the interactions between the first entity and a first resource;
determine entity characteristics of the first entity;
determine resource characteristics of the first resource; and
determine the stability score based on the entity characteristics, the resource characteristics, and the interaction characteristics.

13. The system of any one of claims 8 to 12, wherein to determine the candidate permission set for the first entity, the program code is structured to cause the processor to:

determine interactions between the first entity and a first resource associated with the current permission set; and
determine the candidate permission set based on interactions between second entities and second resources, similarities between the first entity and the second entities, and similarities between the first resource and the second resources.

14. The system of claim 13, wherein to determine the candidate permission set based on interactions between second entities and second resources, similarities between the first entity and the second entities, and similarities between the first resource and the second resources, the program code is structured to cause the processor to:

determine entity characteristics of the first entity;
determine resource characteristics of the first resource;
provide the entity characteristics and resource characteristics to a factorization machine trained on training data comprising characteristics associated with the second entities and characteristics associated with the second resources; and
receive, from the factorization machine, the candidate permission set.

15. A computer-readable storage medium (1020, 1048, 1094) comprising executable instructions (1014, 1076, 1096) that, when executed by a processor (1010, 1042, 1044, 1058, 1090), causes the processor (1010, 1042, 1044, 1058, 1090) to perform the steps of any one of the preceding method claims.

FIG. 1

200

**Computing Device 102**

**Permission Analyzer 104**

Factorization Machine 206

218 — 220

Candidate Permission Determiner 204

222

Security Gain Determiner 212

224

Action Handler 214

216

Information Retriever 202

Criticality Determiner 208

226

Stability Determiner 210

228

116

118     120     122     124     126

128

Historical Interaction Information 106

Entity Information 108

Resource Information 110

Current Permissions 112

Attack Information 114

FIG. 2

300

| Determine a candidate permission set for a first entity |
302

↓

| Determine a criticality score indicative of a criticality of the first entity |
304

↓

| Determine, based on historical usage of a current permission set by the first entity, a stability score indicative of a likelihood that usage of a current permission set by the first entity will change in a predetermined period of time |
306

↓

| Determine a security gain score indicative of an amount of security improvement achievable by replacing the current permission set with the candidate permission set |
308

↓

| Replace, for the first entity, the current permission set with the candidate permission set based on the criticality score, the stability score, and the security gain score |
310

FIG. 3

400

| Determine a combined score based on a weighted combination of a criticality score, a stability score, and a security gain score |
402

↓

| Determine that the combined score satisfies a predetermined permission reduction criterion |
404

FIG. 4

500

| Determine interactions between a first entity and a first resource associated with a current permission set assigned to the first entity |
|---|

502

| Determine a candidate permission set based on interactions between second entities and second resources, similarities between the first entity and the second entities, and similarities between the first resource and the second resources |
|---|

504

## FIG. 5

600

| Determine interactions between a first entity and a first resource associated with a current permission set |
|---|

602

| Determine entity characteristics of the first entity |
|---|

604

| Determine resource characteristics of the first resource |
|---|

606

| Provide the entity characteristics and resource characteristics to a factorization machine trained on training data comprising characteristics associated with the second entities and characteristics associated with the second resources |
|---|

608

| Receive, from the factorization machine, a candidate permission set |
|---|

610

## FIG. 6

700

| Determine a delta permission set based on a set difference between a current permission set and a candidate permission set |
| --- |

702

| Determine a security gain score based on at least one of: an attack path that uses a permission in the delta permission set, a resource characteristic associated with a resource accessible by a permission in the delta permission set, or an ongoing security attack associated with a permission in the delta permission set |
| --- |

704

## FIG. 7

800

| Provide, to a classifier model, entity characteristics associated with a first entity and historical activity comprising a resource or a second entity the first entity interacts with, the classifier model trained to determine the criticality of the first entity based on at least one of: an entity type associated with the first entity, an activity type associated with the first entity, an activity pattern associated with the first entity, a resource characteristic associated with the resource in the historical activity, or an entity characteristic associated with the second entity in the historical activity |
| --- |

802

| Receive, from the classifier model, a criticality score indicative of a criticality of the first entity |
| --- |

804

## FIG. 8

<u>900</u>

902 ⌇ ┌─────────────────────────────────────────────────────────┐
         │   Determine interaction characteristics of the interactions by │
         │            a first entity and a first resource              │
         └─────────────────────────────────────────────────────────┘

904 ⌇ ┌─────────────────────────────────────────────────────────┐
         │      Determine entity characteristics of the first entity    │
         └─────────────────────────────────────────────────────────┘

906 ⌇ ┌─────────────────────────────────────────────────────────┐
         │    Determine resource characteristics of the first resource  │
         └─────────────────────────────────────────────────────────┘

908 ⌇ ┌─────────────────────────────────────────────────────────┐
         │  Determine a stability score based on the entity characteristics, │
         │  the resource characteristics, and the interaction characteristics │
         └─────────────────────────────────────────────────────────┘

FIG. 9

1000

Network-Based Server Infrastructure 1070

Clusters 1072

Nodes 1074

Node 1046

Storage 1048

Application Programs 1076

Application Data 1078

Processor 1058

1004

Network

On-Premises Servers 1092

Storage 1094

Application Programs 1096

Application Data 1098

Processor 1090

FIG. 10

Computing Device 1002

Input Device(s) 1030

Camera 1036

Touch Screen 1032

Physical Keyboard 1038

Microphone 1034

Trackball 1040

Power Supply 1082

Accelerometer 1086

LI Receiver 1084

NPU 1044

MLM 1028

GPU 1042

Processor 1010

Wired Interface(s) 1080

Output Device(s) 1050

Speaker 1052

Display 1054

Wireless Modem(s) 1060

Wi-Fi 1062

Bluetooth 1064

Cellular 1066

Storage 1020

Memory 1056

Non-Removable Memory 1022

Firmware 1018

Removable Memory 1024

Operating System 1012

Application Programs 1014

Application Data 1016

Storage Device 1088

1006

## EUROPEAN SEARCH REPORT

**Application Number**

EP 25 17 8608

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/203687 A1 (RABIN NIV [IL] ET AL) 1 July 2021 (2021-07-01) | 1-5, 8-12,15 | INV.<br>G06F21/60<br>H04L9/40 |
| Y | * paragraph [0004] *<br>* paragraph [0006] *<br>* paragraph [0041] *<br>* paragraph [0051] - paragraph [0064] *<br>* paragraph [0079] *<br>* paragraph [0132] - paragraph [0150] *<br>----- | 6,7,13, 14 | |
| Y | US 2019/327271 A1 (SAXENA ABHISHEK [US] ET AL) 24 October 2019 (2019-10-24)<br>* paragraph [0160] - paragraph [0174] *<br>----- | 6,7,13, 14 | |
| A | EP 3 567 506 A1 (CYBERARK SOFTWARE LTD [IL]) 13 November 2019 (2019-11-13)<br>* paragraph [0004] - paragraph [0021] *<br>* paragraph [0058] - paragraph [0063] *<br>----- | 1-15 | |
| A | US 2023/216888 A1 (ALAEDDINI ATIYE [US] ET AL) 6 July 2023 (2023-07-06)<br>* paragraph [0024] - paragraph [0025] *<br>* paragraph [0049] - paragraph [0050] *<br>----- | 1-15 | **TECHNICAL FIELDS SEARCHED (IPC)**<br><br>G06F<br>H04L |

The present search report has been drawn up for all claims

| Place of search | Date of completion of the search | Examiner |
|---|---|---|
| The Hague | 14 July 2025 | Cosse, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8608

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | | Publication date | Patent family member(s) | | Publication date |
|---|---|---|---|---|---|
| US 2021203687 | A1 | 01-07-2021 | NONE | | |
| US 2019327271 | A1 | 24-10-2019 | US | 2019327271 A1 | 24-10-2019 |
| | | | WO | 2019204778 A1 | 24-10-2019 |
| EP 3567506 | A1 | 13-11-2019 | EP | 3567506 A1 | 13-11-2019 |
| | | | US | 10148701 B1 | 04-12-2018 |
| US 2023216888 | A1 | 06-07-2023 | NONE | | |

EPO FORM P0459

For more details about this annex : see Official Journal of the European Patent Office, No. 12/82